(19) Europäisches Patentamt / European Patent Office / Office européen des brevets

(11) **EP 4 016 568 A1**

(12) **EUROPEAN PATENT APPLICATION**
published in accordance with Art. 153(4) EPC

(43) Date of publication:
**22.06.2022 Bulletin 2022/25**

(21) Application number: **20851841.5**

(22) Date of filing: **07.08.2020**

(51) International Patent Classification (IPC):
*H01G 11/52* (2013.01)          *H01G 11/84* (2013.01)
*H01M 50/409* (2021.01)

(52) Cooperative Patent Classification (CPC):
**H01G 11/52; H01G 11/84; H01M 50/409;**
Y02E 60/10

(86) International application number:
**PCT/JP2020/030505**

(87) International publication number:
**WO 2021/029397 (18.02.2021 Gazette 2021/07)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **15.08.2019 JP 2019149148**

(71) Applicant: **Toray Industries, Inc.**
**Tokyo, 103-8666 (JP)**

(72) Inventors:
• **HAGIHARA, Tatsunori**
  **Nasushiobara-shi, Tochigi 329-2763 (JP)**
• **ECHIZEN, Kenji**
  **Nasushiobara-shi, Tochigi 329-2763 (JP)**
• **NINOMIYA, Hirokazu**
  **Nasushiobara-shi, Tochigi 329-2763 (JP)**
• **MIZUNO, Naoki**
  **Nasushiobara-shi, Tochigi 329-2763 (JP)**

(74) Representative: **Mewburn Ellis LLP**
**Aurora Building**
**Counterslip**
**Bristol BS1 6BX (GB)**

(54) **SEPARATOR FOR BATTERIES AND METHOD FOR PRODUCING SAME**

(57)    The present invention relates to a separator for batteries comprising a porous polyolefin membrane and a heat-resistant porous layer arranged on at least one surface of the porous polyolefin membrane, wherein: the heat-resistant porous layer contains barium sulfate particles and an organic synthetic resin component; and the content of the barium sulfate particles, the increase in the air resistance per a thickness of 1 $\mu$m of the heat-resistant porous layer, the shrinkage after being left to stand for 1 hour in an atmosphere at 130°C, and the hydrogen sulfide concentration are respectively within specific ranges.

EP 4 016 568 A1

**Description**

TECHNICAL FIELD

The present invention relates to a battery separator including a polyolefin porous film and a heat-resistant porous layer on at least one surface of the polyolefin porous film, and a method for producing the battery separator. The battery separator according to the embodiment of the present invention can be effectively used as a separator for a lithium ion secondary battery.

BACKGROUND ART

A thermoplastic resin porous film has been widely used for the material separation, the selective permeation, an isolation material, or the like. The thermoplastic resin porous film has been used as, for example, a battery separator used for a lithium ion secondary battery, a nickel-metal hydride battery, a nickel-cadmium battery, a polymer battery, and the like, a separator for an electric double layer capacitor, various filters such as a reverse osmosis filtration membrane, an ultrafiltration membrane, and a microfiltration membrane, moisture-permeable waterproof clothing, and a medical material.

In particular, as a separator for a lithium ion secondary battery, use is suitably made of a polyolefin porous film having ion permeability by impregnation with an electrolytic solution, excellent electrical insulation properties, electrolytic solution resistance, and oxidation resistance, and also has a pore blocking effect of preventing excessive temperature rise by blocking a current at a temperature of about 120°C to 150°C during abnormal temperature rise of a battery.

However, in a case where the temperature is continuously increased for some reason even after the pores are blocked, the rupture may occur in the polyolefin porous film due to a decrease in the viscosity of polyolefins constituting the film and contraction of the film. This phenomenon is not limited to the case where polyolefin is used, and even in the case where another thermoplastic resin is used, the phenomenon cannot be avoided at a temperature equal to or higher than a melting point of the resin constituting the porous film.

In particular, the separator for the lithium ion secondary battery is deeply involved in battery characteristics, battery productivity, and battery safety, and is required to have excellent mechanical characteristics, heat resistance, permeability, dimensional stability, pore blockage characteristics (shutdown characteristics), melting rupture characteristics (meltdown characteristics), and the like. Furthermore, in order to improve the cycle characteristics of a battery, improvement in the adhesion to an electrode material and improvement in the electrolytic solution permeability for improving the productivity are required. For this reason, studies have been made to laminate various modified porous layers on a porous film.

As the modified porous layer, a polyamide-imide resin, a polyimide resin, and a polyamide resin having both the heat resistance and the electrolytic solution permeability, and/or a fluorine-based resin having excellent electrode adhesion are suitably used. In addition, a water-soluble or water-dispersible binder, with which a modified porous layer is laminated by using a relatively simple water washing step or drying step, has also been widely used. The above modified porous layer refers to a layer containing a resin that imparts or improves at least one or more functions such as the heat resistance, the adhesion to an electrode material, and the electrolytic solution permeability.

In recent years, the importance of the lithium ion secondary battery as a high-efficiency energy device has increased, a further increase in energy density has been promoted, and studies have been made to increase the capacity of members formed in a container in order to improve the battery capacity. In such a trend, it is predicted that the remaining margin of a separator located between a positive electrode and a negative electrode is narrowed with respect to an increase in an area of the electrode, and the positional accuracy of the separator with respect to the electrode is further improved.

Example 1 of Patent Literature 1 discloses a separator by which the heat resistance and the stability of a battery are improved by coating, by means of gravure coating, a polyethylene separator having a thickness of 12 μm with a slurry obtained by blending barium sulfate particles and poly (meth)acrylamide.

Patent Literature 2 discloses a separator that contains 2 to 20 parts by weight of barium sulfate per 100 parts by weight of a microporous film, thereby detecting a relative position between an electrode and a separator in an X-ray inspection.

Example 1 of Patent Literature 3 discloses a separator that is obtained by coating a polyethylene microporous film with a coating liquid obtained by dissolving a polyvinylidene fluoride-based resin (VDF-HFP copolymer, VDF:HFP (molar ratio) = 97.6:2.4, weight average molecular weight: 1,130,000) in a mixed solvent of dimethylacetamide (DMAc) and tripropylene glycol (TPG) (DMAc:TPG = 80:20 [mass ratio]) to reach a resin concentration of 4 mass%, and further mixing barium sulfate particles (average primary particle diameter: 0.10 μm) with the resulting mixture in a stirring manner.

CITATION LIST

PATENT LITERATURE

Patent Literature 1: Japanese Patent No. 6337512
Patent Literature 2: Japanese Patent No. 5898405
Patent Literature 3: Japanese Patent No. 6526359

SUMMARY OF INVENTION

TECHNICAL PROBLEM

A battery separator is located between a positive electrode and a negative electrode of a lithium secondary battery. Since the battery separator is a member for insulating the flow of electrons between the positive electrode and the negative electrode, it is important to dispose the battery separator at an appropriate position. In recent years, lithium ion secondary batteries are required to have a high capacity at all times, and in order to increase the amount that can be filled in a container as much as possible, studies have been made to increase the area of electrodes as much as possible.

On the other hand, the margin that can be ensured by the battery separator has become narrower, and further improvement in the accuracy of the position relative to the electrode has been required more than ever. In general, a current collector of an electrode is a metal such as copper or aluminum, and shields X-rays, and therefore, detection of positional deviation based on X-ray imaging is enabled in an X-ray inspection step for inspecting a state of the electrode inside the battery. The position of the battery separator also deviates similarly to the positive electrode and the negative electrode, and in order to manage a positional deviation state of the battery separator, it is necessary to observe the battery separator at the same time as the electrodes.

In addition, in order to improve the safety of the battery, the heat-resistant porous layer is required to have higher heat resistance. In order to improve the heat resistance, inorganic particles may be blended in addition to the heat-resistant resin. Further, in order to prevent shrinkage of the separator due to heat, particles having a small particle diameter may be blended to improve the filling density of the particles.

However, when the filling density is improved, the gap between the particles may become narrow, and the amount of increase in the air permeability resistance may become large. The heat-resistant porous layer according to the present invention is a modified porous layer specialized for the heat resistance. In addition, the amount of increase in the air permeability resistance refers to a difference between the air permeability resistance of a polyolefin porous film serving as a substrate and the air permeability resistance of the battery separator obtained by laminating the heat-resistant porous layer.

In addition, the lithium ion secondary battery contains an electrolyte that is important for a battery reaction, and the electrolyte may react very sensitively with water, which may cause deterioration of battery performance due to generation of gas such as hydrogen fluoride and consumption of the electrolyte. When boehmite contained as inorganic particles in a modified porous layer of a general battery separator is taken as an example, boehmite contains water molecules in the structure thereof, has a large number of hydroxyl groups on the surface of the particles, and has a property of adsorbing a large amount of moisture by forming hydrogen bonds with moisture in the air. The boehmite contains moisture also in the modified porous layer, and when the boehmite comes into contact with an electrolytic solution in a battery, the moisture reacts with the electrolyte, thereby causing generation of gas such as hydrofluoric acid and deterioration of battery performance.

An object of the present invention is to provide a battery separator that enables observation of a positional deviation with an electrode in an X-ray inspection step in a production process of a secondary battery, has a small amount of increase in air permeability resistance while preventing thermal shrinkage, and contains a small amount of moisture.

SOLUTION TO PROBLEM

In order to solve the above problems, a battery separator and a method for manufacturing the battery separator according to an embodiment of the present invention have the following configurations.

(1) A battery separator including:

a polyolefin porous film; and
a heat-resistant porous layer provided on at least one surface of the polyolefin porous film, in which:

the heat-resistant porous layer contains barium sulfate particles and an organic synthetic resin component;
the barium sulfate particles are contained in the heat-resistant porous layer in an amount of 70 volume% or more and 96 volume% or less based on 100 volume% of a total of the barium sulfate particles and the organic synthetic resin component, and are contained in the heat-resistant porous layer in an amount of 1.8 g/m$^2$ or more and 19.8 g/m$^2$ or less; and
an amount of increase in an air permeability resistance per 1 $\mu$m thickness of the heat-resistant porous layer is 10.0 sec/100 ccAir or less, a shrinkage rate when the heat-resistant porous layer has been left under an atmosphere of 130°C for 1 hour is 8.0% or less, and a concentration of hydrogen sulfide is 0.3 ppm by volume or less

(in which the concentration of hydrogen sulfide is obtained by converting a measured value to a value per 1 m$^2$ of a battery separator, the measured value being determined by enclosing 5 m$^2$ of a battery separator into a sealed container having a capacity of 1 L, leaving the battery separator under an atmosphere of 60°C for 24 hours, and then measuring gas in the container according to a gas detector tube method specified by JIS K 0804:2014).
(2) The battery separator according to (1), in which the barium sulfate particles are precipitated barium sulfate.
(3) The battery separator according to (2), in which the precipitated barium sulfate is produced by Glauber's salt method.
(4) The battery separator according to any one of (1) to (3), in which an average particle diameter of the barium sulfate particles is 0.3 $\mu$m or more and 2.0 $\mu$m or less.
(5) The battery separator according to any one of (1) to (4), in which a thickness of the heat-resistant porous layer is 1 $\mu$m or more and 8 $\mu$m or less.
(6) The battery separator according to any one of (1) to (5), in which the organic synthetic resin component contains a dispersant and a binder.
(7) The battery separator according to (6), in which the dispersant is a cellulose-based resin.
(8) The battery separator according to (6) or (7), in which the binder is an acrylic resin.
(9) The battery separator according to any one of (1) to (8), having a moisture content of 500 ppm or less.
(10) A method for producing the battery separator according to any one of (1) to (9), the method including:

mixing barium sulfate particles, a dispersant and a solvent, thereby obtaining a mixed solution; and
then dispersing the mixed solution by a bead mill disperser including ceramic beads having a bead particle diameter of 0.3 mm or more and 1.0 mm or less under a condition of a filling rate of 65 volume% or more and 85 volume% or less, thereby preparing a masterbatch solution.

ADVANTAGEOUS EFFECTS OF INVENTION

An embodiment of the present invention can provide a battery separator that enables observation of a positional deviation with an electrode in an X-ray inspection step in a production process of a secondary battery, has a low amount of increase in air permeability resistance while preventing thermal shrinkage, suppresses hydrogen sulfide that can promote deterioration of the battery, and contains a small amount of moisture.

DESCRIPTION OF EMBODIMENTS

Hereinafter, an embodiment of the present invention will be described in detail. The present invention is not limited to the embodiment described below.
A battery separator according to an embodiment of the present invention includes a polyolefin porous film and a heat-resistant porous layer provided on at least one surface of the polyolefin porous film.

[Polyolefin Porous Film]

The thickness of the polyolefin porous film in the embodiment of the present invention is not particularly limited as long as the polyolefin porous film has the function of a battery separator, and is preferably 25 $\mu$m or less. The thickness is more preferably 7 $\mu$m or more and 20 $\mu$m or less, and still more preferably 9 $\mu$m or more and 16 $\mu$m or less. When the thickness of the polyolefin porous film is 25 $\mu$m or less, both practical film strength and a pore blocking function can be achieved, an area per unit volume of a battery case is not restricted, and the polyolefin porous film is suitable for increasing the capacity of the battery.

The polyolefin porous film preferably has an air permeability resistance of 300 sec/100 ccAir or less. The air permeability resistance is more preferably 200 sec/100 ccAir or less, and still more preferably 150 sec/100 ccAir or less. The preferred lower limit is not particularly limited. When the air permeability resistance is 300 sec/100 ccAir or less, sufficient charging and discharging characteristics of a battery, particularly, sufficient ion permeability (a charging and discharging operation voltage) and sufficient battery life (closely related to the holding amount of the electrolytic solution) can be obtained. In addition, the function of the battery can be sufficiently exerted, and sufficient mechanical strength and insulation reduce the likelihood of short circuits during charging and discharging.

The porosity of the polyolefin porous film is preferably 30% or more and 70% or less. The porosity is more preferably 35% or more and 60% or less, and still more preferably 40% or more and 55% or less. When the porosity is 30% or more and 70% or less, sufficient charging and discharging characteristics of a battery, particularly, sufficient ion permeability (a charging and discharging operation voltage) and sufficient battery life (closely related to the holding amount of the electrolytic solution) can be obtained. In addition, the function of the battery can be sufficiently exerted, and sufficient mechanical strength and insulation reduce the likelihood of short circuits during charging and discharging.

The average pore diameter of the polyolefin porous film is preferably 0.01 $\mu$m or more and 1.0 $\mu$m or less since the average pore diameter greatly affects the pore blocking function. The average pore diameter is more preferably 0.05 $\mu$m or more and 0.5 $\mu$m or less, and still more preferably 0.1 $\mu$m or more and 0.3 $\mu$m or less. When the average pore diameter of the polyolefin porous film is 0.01 $\mu$m or more and 1.0 $\mu$m or less, sufficient adhesion strength of the heat resistant porous layer to the polyolefin porous film is obtained due to an anchor effect of a binder. In addition, when the heat-resistant porous layer is laminated, the air permeability resistance does not significantly deteriorate, the response to the temperature of the pore blocking phenomenon is not slowed down, and the pore blocking temperature depending on a temperature rise rate does not shift to the higher temperature side.

The polyolefin resin constituting the polyolefin porous film is not particularly limited, and is preferably polyethylene or polypropylene. The polyolefin resin may be a single substance or a mixture of two or more different polyolefin resins, for example, a mixture of polyethylene and polypropylene, or a copolymer of different olefins. This is because the polyolefin resin has not only the basic characteristics such as electrical insulation properties and ion permeability but also a pore blocking effect of blocking a current and preventing an excessive temperature rise at the time of abnormal temperature rise of the battery.

Among these, polyethylene is particularly preferred from the viewpoint of an excellent pore blocking function. Hereinafter, polyethylene will be described in detail as an example of the polyolefin resin used in the present invention, but the embodiment of the present invention is not limited thereto.

Examples of the polyethylene include an ultrahigh-molecular weight polyethylene, a high-density polyethylene, a medium-density polyethylene, and a low-density polyethylene. The polymerization catalyst is also not particularly limited, and examples thereof include Ziegler-Natta catalysts, Philips catalysts, and metallocene catalysts. These polyethylenes may be not only a homopolymer of ethylene but also a copolymer containing a small number of other $\alpha$-olefins. Examples of the $\alpha$-olefins other than ethylene include propylene, 1-butene, 1-pentene, 1-hexene, 4-methyl-1-pentene, 1-octene, (meth)acrylic acid, (meth)acrylic acid esters, styrene, and the like.

The polyethylene may be a single substance, and is preferably a mixture of two or more kinds of polyethylenes. As the polyethylene mixture, a mixture of two or more kinds of ultrahigh-molecular weight polyethylenes having different weight average molecular weights (Mw), or a similar mixture of high-density polyethylenes, medium-density polyethylenes, or low-density polyethylenes may be used, or a mixture of two or more kinds of polyethylenes selected from the group consisting of an ultrahigh-molecular weight polyethylene, a high-density polyethylene, a medium-density polyethylene, and a low-density polyethylene may be used.

The polyethylene porous film needs to have a function of blocking pores when the charging and discharging reaction is abnormal. Therefore, a melting point (softening point) of the constituent resin is preferably 70°C or higher and 150°C or lower. The melting point is more preferably 80°C or higher and 140°C or lower, and further preferably 100°C or higher and 130°C or lower. When the melting point of the constituent resin is 70°C or higher and 150°C or lower, the battery does not become unusable due to the hole blocking function exhibited during normal use, and safety can be ensured by exhibiting the pore blocking function during an abnormal reaction.

[Heat-resistant Porous Layer]

The battery separator according to the embodiment of the present invention includes a heat-resistant porous layer provided on at least one surface of the above polyolefin porous film, and contains barium sulfate particles and an organic synthetic resin component.

A content of the barium sulfate particles per unit area in the heat-resistant porous layer is 1.8 g/m² or more and 19.8 g/m² or less. The content is preferably 4.3 g/m² or more and 16.8 g/m² or less, and more preferably 6.9 g/m² or more and 13.8 g/m² or less.

When the content of the barium sulfate particles is less than 1.8 g/m², an image of a battery separator taken by using X-rays appears faint, and thus, a position of the separator may not be easily identified, or the shrinkage of the polyolefin porous film due to heat may not be prevented. When the content of the barium sulfate particles is more than 19.8 g/m², an image of the battery separator taken by using X-rays appears dark, and thus, it is difficult to identify a boundary line between the separator and the electrode, or an inter-electrode distance between the positive electrode and the negative electrode of the battery cell increases, and as a result, the proportion of the battery separator in the capacity of the battery cell may increase, and the capacity density of the battery may decrease.

When the content of the barium sulfate particles is 1.8 g/m² or more and 19.8 g/m² or less, the boundary line between the image of the battery separator and the image of the electrode taken by using the X-rays can be identified, the shrinkage of the polyolefin porous film due to heat can be prevented, and the capacity density of the battery is not reduced.

A thickness of the heat-resistant porous layer is preferably 1 μm or more and 8 μm or less. The thickness is more preferably 2 μm or more and 7 μm or less, and still more preferably 3 μm or more and 6 μm or less.

When the thickness of the heat-resistant porous layer is less than 1 μm, an image of a battery separator taken by using X-rays appears faint, and thus, a position of the separator may not be easily identified, or the shrinkage of the polyolefin porous film due to heat may not be prevented. When the thickness of the heat-resistant porous layer is more than 8 μm, an image of the battery separator taken by using X-rays appears dark, and thus, it is difficult to identify a boundary line between the separator and the electrode, or an inter-electrode distance between the positive electrode and the negative electrode of the battery cell increases, and as a result, the proportion of the battery separator in the capacity of the battery cell may increase, and the capacity density of the battery may decrease.

When the thickness of the heat-resistant porous layer is 1 μm or more and 8 μm or less, the boundary line between the image of the battery separator and the image of the electrode taken by using the X-rays can be identified, the shrinkage of the polyolefin porous film due to heat can be prevented, and the capacity density of the battery is not reduced.

The heat-resistant porous layer may be provided on only one surface of the polyolefin porous film, or may be provided on both surfaces of the polyolefin porous film. When the heat-resistant porous layer is provided on only one surface, the number of steps of forming the heat-resistant porous layer is reduced, and the production cost can be further reduced. When the heat-resistant porous layer is provided on both surfaces, the shrinkage rate of the battery separator due to heat can be more effectively reduced by preventing the shrinkage of the polyolefin porous film due to heat from both surfaces.

In the present invention, the X-ray imaging method is not particularly limited, and it is preferable to use a scintillator with higher sensitivity in order to clearly identify the positional deviation between the electrode and the battery separator. Among them, when a cell type scintillator described in paragraph [0112] of "JP 2017-187818 A" is used, the positional deviation between the electrode and the battery separator can be clearly identified, which is preferred. Specifically, a laminate of a negative electrode using a copper foil as a current collector and a battery separator is prepared, and then, an X-ray detector (1515DX manufactured by Varex Imaging Corporation, pixel pitch: 127 μm) and the cell type scintillator (pixel pitch: 127 μm) are used to perform X-ray imaging of the laminate for test under the following conditions.

Tube voltage of X-ray source: 80 kV
Focal diameter of X-ray source: 20 μm
Radiation source-FPD distance: 247 mm
Radiation source-object distance: 82 mm (magnification: 3 times)
Imaging time: 1 sec (five images were imaged at an imaging time of 0.2 sec and averaged)
The presence or absence of a boundary line between the battery separator and the electrode can be determined from the obtained image.

An amount of increase in the air permeability resistance per 1 μm thickness of the heat-resistant porous layer is 10.0 sec/100 ccAir or less. The amount of increase is preferably 7.0 sec/100 ccAir or less, and more preferably 4.0 sec/100 ccAir or less.

When the amount of increase in the air permeability resistance of the air permeability resistance per 1 μm thickness of the heat-resistant porous layer is more than 10.0 sec/100 ccAir, the diffusion transfer resistance of lithium ions inside the battery may increase, or the porous layer may be clogged with by-products generated by the battery reaction, and thus, the performance of the battery may significantly deteriorate. When the amount of increase in the air permeability resistance of the air permeability resistance per 1 μm thickness of the heat-resistant porous layer is 10.0 sec/100 ccAir or less, the diffusion transfer resistance of lithium ions inside the battery does not increase, and the performance of the battery does not significantly deteriorate.

In order to make the amount of increase in the air permeability resistance per 1 μm thickness of the heat-resistant porous layer be 10.0 sec/100 ccAir or less, for example, a method for producing a battery separator according to an embodiment of the present invention, which will be described later, can be used.

The shrinkage rate when the battery separator has been left under an atmosphere of 130°C for 1 hour is 8.0% or less. The shrinkage rate is preferably 6.0% or less, and more preferably 4.0% or less. When the shrinkage rate of the battery separator having been left under an atmosphere of 130°C for 1 hour is more than 8.0%, the battery separator shrinks when the battery is exposed to heat, and thus, an insulation state between the positive electrode and the negative electrode may not be maintained. When the shrinkage rate of the battery separator having been left under an atmosphere of 130°C for 1 hour is 8.0% or less, the insulation state between the positive electrode and the negative electrode can be maintained when the battery is exposed to heat.

[Porosity of Heat-resistant Porous Layer]

The porosity of the heat-resistant porous layer is preferably 30% or more and 65% or less. The porosity is more preferably 35% or more and 60% or less, and still more preferably 40% or more and 55% or less.

When the porosity of the heat-resistant porous layer is less than 30%, gaps between individual barium sulfate particles in the heat-resistant porous layer are narrowed, and thus, an amount of increase in the air permeability resistance per 1 $\mu$m thickness of the heat-resistant porous layer may be more than 10.0 sec/100 ccAir. When the porosity of the heat-resistant porous layer is more than 65%, the gaps between the individual barium sulfate particles in the heat-resistant porous layer are widened, and thus, a structure of the heat-resistant porous layer may become brittle, and it may be difficult to prevent the shrinkage of the polyolefin porous film due to heat.

When the porosity of the heat-resistant porous layer is 30% or more and 65% or less, the amount of increase in the air permeability resistance per 1 $\mu$m thickness of the heat-resistant porous layer is 10.0 sec/100 ccAir or less, and the shrinkage of the polyolefin porous film due to heat can be prevented.

Next, compositions constituting the heat-resistant porous layer will be described in detail. The heat-resistant porous layer in the embodiment of the present invention contains barium sulfate particles and an organic synthetic resin component.

[Barium Sulfate Particles]

Barium sulfate particles are generally widely used because ground barite particles obtained by pulverizing barite, which is a natural material, can be obtained at a relatively low cost. Other examples include precipitated barium sulfate particles having a uniform particle diameter by a synthesis method. When the particle diameters of the barium sulfate particles are uniform, while forming the heat-resistant porous layer, it is less likely to occur that smaller particles enter the gaps between the barium sulfate particles and the voids of the heat-resistant porous layer are easily maintained. Therefore, the amount of increase in the air permeability resistance can be prevented.

Specifically, the precipitated barium sulfate particles are barium sulfate particles that are obtained by a method (sulfuric acid method) of obtaining barium sulfate by adding sulfuric acid to barium carbonate or barium sulfide or a method (Glauber's salt method) of obtaining barium sulfate by adding sodium sulfate to barium chloride.

As the barium sulfate particles used in the present invention, it is preferable to use precipitated barium sulfate particles obtained by a synthesis method though the cost increases. In particular, barium sulfate particles synthesized by Glauber's salt method in which barium chloride is used as a starting material and reacts with sodium sulfate (Glauber's salt). The reason for this is that it has been found in the process of examining barium sulfate particles that barium sulfate particles synthesized by Glauber's salt method generate extremely small amount of hydrogen sulfide and can prevent generation of corrosive gas.

An average particle diameter of the barium sulfate particles is preferably 0.3 $\mu$m or more and 2.0 $\mu$m or less. The average particle diameter is more preferably 0.4 $\mu$m or more and 1.5 $\mu$m or less, and still more preferably 0.5 $\mu$m or more and 1.0 $\mu$m or less.

When the average particle diameter of the barium sulfate particles is less than 0.3 $\mu$m, the gaps between the individual barium sulfate particles in the heat-resistant porous layer are narrowed, and thus, the amount of increase in the air permeability resistance per 1 $\mu$m thickness of the heat-resistant porous layer may be more than 10.0 sec/100 ccAir. When the average particle diameter of the barium sulfate particles is more than 2.0 $\mu$m, the gaps between the individual barium sulfate particles in the heat-resistant porous layer are widened, and thus, the structure of the heat-resistant porous layer may become brittle, and it may be difficult to prevent the shrinkage of the polyolefin porous film due to heat.

When the average particle diameter of the barium sulfate particles is 0.3 $\mu$m or more and 2.0 $\mu$m or less, the amount of increase in the air permeability resistance per 1 $\mu$m thickness of the heat-resistant porous layer is 10.0 sec/100 ccAir or less, and the shrinkage of the polyolefin porous film due to heat can be prevented.

The average particle diameter of the barium sulfate particles was determined by taking an LEI image of barium sulfate particles on a surface of the heat-resistant porous layer at a magnification of 10,000 times using a scanning electron microscope (JSM6701F, manufactured by JEOL Ltd.) with an acceleration voltage of 2.0 kV Next, long diameters of 100 barium sulfate particles were randomly measured, and an average value thereof was defined as the average particle diameter.

A shape of the barium sulfate particles in the embodiment of the present invention is not particularly limited, and barium sulfate particles having various shapes can be used. Specific examples of the shape include a true spherical shape, a substantially spherical shape, a plate shape, a needle shape, and a polyhedral shape, and any of these shapes may be used.

[Volume Composition Ratio of Heat-Resistant Porous Layer]

The content of the barium sulfate particles contained in the heat-resistant porous layer in the embodiment of the present invention is 70 volume% or more and 96 volume% or less when the total of the barium sulfate particles and the organic synthetic resin component is set as 100 volume%. The content is more preferably 77 volume% or more and 93 volume% or less, and still more preferably 85 volume% or more and 90 volume% or less.

When the content of the barium sulfate particles is less than 70 volume%, the gaps between the individual barium sulfate particles in the heat-resistant porous layer are clogged with the organic synthetic resin component. Therefore, the amount of increase in the air permeability resistance per 1 $\mu$m thickness of the heat-resistant porous layer may not be 10.0 sec/100 ccAir or less, or when the battery separator is exposed to heat, the organic synthetic resin component present in the gaps between the barium sulfate particles may shrink, and it may be difficult to prevent the shrinkage of the polyolefin porous film due to heat.

When the content of the barium sulfate particles is more than 96 volume%, a binder that binds the individual barium sulfate particles together is insufficient, the structure of the heat-resistant porous layer cannot be maintained, and it may be difficult to prevent the shrinkage of the polyolefin porous film due to heat.

When the content of the barium sulfate particles is 70 volume% or more and 96 volume% or less, the gaps between the individual barium sulfate particles in the heat-resistant porous layer are not clogged with the organic synthetic resin component, and the amount of increase in the air permeability resistance per 1 $\mu$m thickness of the heat-resistant porous layer can be 10.0 sec/ccAir or less. In addition, the binder that binds the barium sulfate particles together does not become insufficient, and the shrinkage of the polyolefin porous film due to heat can be prevented.

[Concentration of Hydrogen Sulfide]

The concentration of hydrogen sulfide generated per 1 $m^2$ of the battery separator according to the embodiment of the present invention is 0.3 ppm by volume or less. The concentration of hydrogen sulfide is preferably 0.2 ppm by volume or less, and more preferably 0.1 ppm by volume or less.

When the concentration of hydrogen sulfide generated per 1 $m^2$ of the battery separator is more than 0.3 ppm by volume, gas may be generated inside the battery cell, or an oxidation reaction between the current collector of the electrode and hydrogen sulfide may deteriorate the current collector and shorten the life of the battery. When the concentration of hydrogen sulfide generated per 1 $m^2$ of the battery separator is 0.3 ppm by volume or less, generation of gas inside the battery cell can be prevented, and deterioration of the current collector of the electrode can be prevented.

The concentration of hydrogen sulfide herein is a value obtained by converting a measured value to a value per 1 $m^2$ of a battery separator, the measured value being determined by enclosing 5 $m^2$ of a battery separator into a sealed container having a capacity of 1 L, leaving the battery separator under an atmosphere of 60°C for 24 hours, and then measuring gas in the container according to a gas detector tube method specified by JIS K 0804:2014).

A method for setting the concentration of hydrogen sulfide generated per 1 $m^2$ of the battery separator to 0.3 ppm by volume or less is not particularly limited, and for example, a method of heating barium sulfate produced by a sulfuric acid method among precipitated barium sulfates, or a method of washing the barium sulfate with sufficient water and then drying moisture may be used. The battery separator according to the embodiment of the present invention can be obtained by appropriately subjecting the battery separator to a heat treatment even when the concentration of hydrogen sulfide generated per 1 $m^2$ of the battery separator is more than 0.3 ppm by volume.

[Specific Surface Area of Barium Sulfate Particles]

Since barium sulfate particles do not have a hydroxyl group on the surface of particles, the influence of water molecules adsorbed on the surface is small, and it is possible to prevent the generation of gas such as hydrogen fluoride generated by the reaction between water and the electrolytic solution and the deterioration of battery characteristics due to the consumption of the electrolytic solution. A specific surface area of the barium sulfate particles is preferably 1.0 $m^2/g$ or more and 18.0 $m^2/g$ or less. The specific surface area is more preferably 2.0 $m^2/g$ or more and 12.0 $m^2/g$ or

less, and still more preferably 3.0 m$^2$/g or more and 6.0 m$^2$/g.

When the specific surface area of the barium sulfate particles is less than 1.0 m$^2$/g, the particle diameter of the individual barium sulfate particles in the heat-resistant porous layer is larger than the thickness of the heat-resistant porous layer. Therefore, barium sulfate particles may be detached from the battery separator, or an inter-electrode distance between the positive electrode and the negative electrode of the battery cell may increase, and thus, the proportion of the separator to the battery cell capacity may increase, and the capacity density of the battery may decrease.

When the specific surface area of the barium sulfate particles is more than 18.0 m$^2$/g, the amount of moisture adsorbed on the surfaces of the barium sulfate particles may increase, and the moisture content of the battery separator may increase.

When the specific surface area of the barium sulfate particles is 1.0 m$^2$/g or more and 18.0 m$^2$/g or less, detachment of the barium sulfate particles and a decrease in the capacity density of the battery do not occur, and the moisture content of the battery separator does not increase, which is preferred.

The moisture content herein refers to a measured value determined by allowing 1 g of a battery separator to stand in an atmosphere having a dew point of -60°C for 24 hours, then heating the battery separator in a nitrogen atmosphere at a temperature condition of 150°C for 10 minutes, and measuring the moisture content of the battery separator using a Karl Fischer moisture content meter (MKC-610, manufactured by Kyoto Electronics Manufacturing Co., Ltd.) placed in an atmosphere having a dew point of -60°C.

[Organic Synthetic Resin Component]

The organic synthetic resin component in the embodiment of the present invention contains a binder and a dispersant.

[Binder]

The binder in the embodiment of the present invention has both an effect of binding the barium sulfate particles constituting the heat-resistant porous layer together and an effect of allowing the heat-resistant porous layer to adhere to the polyolefin porous film. Specifically, an acrylic resin, polyvinyl alcohol, poly-N-vinylacetamide, or the like can be used, and a commercially available aqueous solution or aqueous dispersion can be used.

Specific examples of the acrylic resin include "JURYMER" (registered trademark) AT-210 and ET-410, "ARON" (registered trademark) A-104, AS-2000, and NW-7060 manufactured by Toagosei Co., Ltd., "LIOACCUM" (registered trademark) series manufactured by Toyochem Co., Ltd., TRD202A and TRD102A manufactured by JSR Corporation, " POLISTRON" (registered trademark) 117, 705, and 1280 manufactured by Arakawa Chemical Industries, Ltd., "COGAM" (registered trademark) series manufactured by Showa Denko K.K., WEM-200U and WEM-3000 manufactured by Taisei Fine Chemical Co., Ltd., and the like.

Specific examples of the polyvinyl alcohol include "KURARAYPOVAL" (registered trademark) 3-98 and 3-88 manufactured by Kuraray Co., Ltd., and "GOHSENOL" (registered trademark) N-300 and GH-20 manufactured by Mitsubishi Chemical Corporation.

Specific examples of poly-N-vinylacetamide include GE191-104 manufactured by Showa Denko K.K.. Among them, preferred is the acrylic resin which has high versatility and by which binding of barium sulfate particles is easy.

The content of the binder in the heat-resistant porous layer is not particularly limited, and is preferably 3.2 volume% or more and 24.0 volume% or less when the total of the barium sulfate particles and the organic synthetic resin component is 100 volume%. The content of the binder is more preferably 5.6 volume% or more and 18.5 volume% or less, and still more preferably 8.0 volume% or more and 12.1 volume% or less.

When the content of the binder is less than 3.2 volume%, a binder that binds the individual barium sulfate particles together is insufficient, the structure of the heat-resistant porous layer cannot be maintained, and it may be difficult to prevent the shrinkage of the polyolefin porous film due to heat.

When the content of the binder is more than 24.0 volume%, the gaps between the individual barium sulfate particles in the heat-resistant porous layer are clogged with the binder, and thus, the amount of increase in the air permeability resistance per 1 μm thickness of the heat-resistant porous layer may not be 10.0 sec/100 ccAir or less. Further, when the battery separator is exposed to heat, the binder present in the gaps between the barium sulfate particles may shrink, and it may be difficult to prevent the shrinkage of the polyolefin porous film due to heat.

When the content of the binder is 3.2 volume% or more and 24.0 volume% or less, the binder that binds the barium sulfate particles together can be sufficient, and thus, the shrinkage of the polyolefin porous film due to heat can be prevented. Since the gaps between the individual barium sulfate particles in the heat-resistant porous layer are not clogged with the binder, the amount of increase in the air permeability resistance per 1 μm thickness of the heat-resistant porous layer can be 10.0 sec/100 ccAir or less.

[Other Additives]

The heat-resistant porous layer may appropriately contain a thermosetting agent, a crosslinking agent, and the like for the purpose of improving heat resistance.

Next, a method for producing the battery separator according to an embodiment of the present invention will be described. The method for producing the battery separator is carried out in the order of slurry production and then formation of the heat-resistant porous layer. Here, the slurry is a liquid to be applied on the polyolefin porous film when the heat-resistant porous layer is formed, and contains barium sulfate particles, an organic synthetic resin component, and a solvent. In addition, additives to be blended as necessary may be contained.

[Slurry Production Method]

The slurry production method for obtaining the heat-resistant porous layer in the embodiment of the present invention includes the following steps: that is,

(a) a step of adding a dispersant to a solvent containing water as a main component, then adding barium sulfate particles thereto, and stirring the mixture to obtain a mixed solution;
(b) a step of subjecting the mixed solution to a dispersion treatment in a bead mill disperser including ceramic beads having a bead particle diameter of 1.0 mm or less to obtain a masterbatch solution; and
(c) a step of adding a binder to the masterbatch solution, and further adding other additives to the masterbatch solution to obtain a slurry.

[Solvent]

As the solvents used in the above step (a), solvents in which the dispersant can be dissolved and the binder can be dissolved or dispersed can be used, and among them, water is preferred. The solvent may contain a small amount of alcohol for the purpose of improving the formability of the heat-resistant porous layer.

[Dispersant]

As the dispersant in the embodiment of the present invention, for example, a cellulose-based resin, an anionic surfactant, a cationic surfactant, a nonionic surfactant, a silicone-based surfactant, and the like can be used.

Representative examples of the cellulose-based resin include carboxymethyl cellulose and derivatives thereof. Specific examples thereof include 1120, 1220, SP200, SE400, and DN-100L manufactured by Daicel FineChem Ltd., "SUNROSE" (registered trademark) FJ08HC and A04SH manufactured by Nippon Paper Industries Co., Ltd., and "CELLOGEN" (registered trademark) 7A and WS-C manufactured by DKS Co. Ltd..

Specific examples of the anionic surfactant include DL-40 and TL-37 manufactured by Nippon Shokubai Co., Ltd., and "ARON" (registered trademark) A-6012 and A-6114 manufactured by Toagosei Co., Ltd..

Specific examples of the cationic surfactant include SN DISPERSANT 4215 and NOPCOSPERSE 092 manufactured by San Nopco Ltd.. Specific examples of the amphoteric surfactant include AMPHITOL 20BS and AMPHITOL 20N manufactured by Kao Corporation.

Specific examples of the nonionic surfactant include EMULGEN 103 and EMULGEN 705 manufactured by Kao Corporation.

Specific examples of the silicone-based surfactant include SN-WET 125 manufactured by San Nopco Ltd.. Among them, a water-soluble polymer is preferred in order to allow the dispersant to efficiently act on the barium sulfate particles. Among them, carboxymethyl cellulose derivatives, which are excellent in dispersibility of barium sulfate particles, have oxidation resistance, are easily available, and contribute to improvement of heat resistance, are more preferred.

The content of the dispersant in the heat-resistant porous layer is not particularly limited, and is preferably 0.8 volume% or more and 5.9 volume% or less when the total of the barium sulfate particles and the organic synthetic resin component is 100 volume%. The content of the dispersant is more preferably 1.4 volume% or more and 4.5 volume% or less, and still more preferably 2.0 volume% or more and 3.0 volume% or less.

When the content of the dispersant is less than 0.8 volume%, the aggregates of the individual barium sulfate particles cannot be sufficiently dispersed in the step (b), and the aggregated particles remain in the heat-resistant porous layer. Therefore, a gap larger than the particle diameter of the barium sulfate particles is likely to be formed in the structure of the heat-resistant porous layer, and the shrinkage of the polyolefin porous film due to heat may not be prevented.

When the addition amount of the dispersant is more than 5.9 volume%, the individual barium sulfate particles once crushed in the step (b) are aggregated again via the dispersant, and undispersed aggregates remain in the heat-resistant porous layer. Therefore, a gap larger than the particle diameter of the barium sulfate particles is likely to be formed in the structure of the heat-resistant porous layer, and the shrinkage of the polyolefin porous film due to heat may not be prevented.

When the addition amount of the dispersant is 0.8 volume% or more and 5.9 volume% or less, the individual barium sulfate particles are maintained in a dispersed state without being re-aggregated, and thus a gap larger than the barium sulfate particles is less likely to be formed in the heat-resistant porous layer, and shrinkage of the polyolefin porous film due to heat can be prevented.

In the step (a), the stirring method is not particularly limited, and stirring with a dispersion blade, a rotation and revolution mixer, a paint shaker, a ball mill, an ultrasonic disperser, a homogenizer, a planetary mixer, or the like may be used. In order to cause the dispersant to effectively act on the barium sulfate particles in the solvent, it is important to add the barium sulfate particles in a state where the dispersant has been sufficiently dissolved in the solvent. Therefore, it is preferable to add the dispersant and then barium sulfate particles to the solvent in this order.

The step (b) is a step in which the ceramic beads are caused to collide with aggregates of the barium sulfate particles contained in the mixed solution using a bead mill disperser, thereby crushing the aggregates into individual barium sulfate particles. In general, in a step of crushing particles, such as barium sulfate, which are easily crushed, a medialess disperser that does not include ceramic beads is considered to be suitable because of less damage to the particles. In the present invention, it is possible to appropriately disperse fragile particles by using a bead mill disperser and adjusting the bead particle diameter and the bead filling rate to suitable conditions.

[Bead Particle Diameter]

The bead particle diameter of the above ceramic bead is preferably 0.3 mm or more and 1.0 mm or less. The bead particle diameter of the ceramic bead is more preferably 0.4 mm or more and 0.8 mm or less, and still more preferably 0.5 mm or more and 0.7 mm or less.

When the bead particle diameter is less than 0.3 mm, the mass per ceramic bead is small, and the shear stress generated between the ceramic beads is small. Therefore, the aggregates of the barium sulfate particles cannot be sufficiently crushed, and aggregates larger than the thickness of the heat-resistant porous layer remain in the slurry. As a result, a gap larger than the particle diameter of the barium sulfate particles is likely to be formed in the structure of the heat-resistant porous layer, and thus, the shrinkage of the polyolefin porous film due to heat may not be able to be prevented, or the inter-electrode distance between the positive electrode and the negative electrode of the battery cell increases, whereby the proportion of the separator to the battery cell capacity may increase, and the capacity density of the battery may decrease.

When the bead particle diameter is more than 1.0 mm, the number of contact points between the ceramic beads are reduced, and aggregates larger than the thickness of the heat-resistant porous layer remain in the slurry. As a result, a gap larger than the particle diameter of the barium sulfate particles is likely to be formed in the structure of the heat-resistant porous layer, and thus, the shrinkage of the polyolefin porous film due to heat may not be able to be prevented, or the inter-electrode distance between the positive electrode and the negative electrode of the battery cell increases, whereby the proportion of the separator to the battery cell capacity may increase, and the capacity density of the battery may decrease.

When the bead particle diameter is 0.3 mm or more and 1.0 mm or less, it is possible to obtain a sufficient crushing effect for the aggregates of the barium sulfate particles. Therefore, the particles larger than the thickness of the heat-resistant porous layer do not remain, shrinkage of the polyolefin porous film due to heat can be prevented, and a decrease in the capacity density of the battery does not occur.

The ceramic beads may be made of at least one material selected from alumina, zirconia, and silicon nitride.

[Bead Filling Rate]

The bead filling rate of the ceramic beads is preferably 65 volume% or more and 85 volume% or less. The bead filling rate of the ceramic beads is more preferably 70 volume% or more and 80 volume% or less. Here, the bead filling rate is a volume occupancy rate of the ceramic beads determined by dividing, by a vessel capacity ($cm^3$), a volume ($cm^3$) determined by dividing a weight (g) of the ceramic beads to be used by a filling density ($g/cm^3$).

When the bead filling rate is less than 65 volume%, the amount of the ceramic beads present in the vessel is small. Therefore, the number of contact points between the ceramic beads is small, and the aggregates of the barium sulfate particles tend to remain. As a result, aggregates of barium sulfate particles may be detached from the heat-resistant porous layer, or the inter-electrode distance between the positive electrode and the negative electrode of the battery cell may increase, and thus, the proportion of the separator to the battery cell capacity may increase, and the capacity density of the battery may decrease.

When the bead filling rate is more than 85 volume%, the number of the contact points between the ceramic beads is excessively increased, and thus, the individual barium sulfate particles that have already been crushed may be pulverized into finer particles. Therefore, fine particles may enter the gaps between the barium sulfate particles forming the heat-resistant porous layer, the amount of increase in air permeability resistance per 1 $\mu$m thickness of the heat-resistant coating layer may be more than 10.0 sec/100 ccAir.

When the filling rate of the ceramic beads is 65 volume% or more and 85 volume% or less, it is possible to obtain a sufficient crushing effect for the aggregates of the barium sulfate particles. Therefore, particles larger than the thickness of the heat-resistant porous film do not remain, and detachment of aggregates of barium sulfate particles from the battery separator and a decrease in the capacity density of the battery do not occur. Furthermore, since it is possible to prevent fine particles from being generated by pulverizing individual barium sulfate particles, the amount of increase in the air permeability resistance per 1 $\mu$m thickness of the heat-resistant porous layer can be 10.0 sec/100 ccAir or less.

In the step (c), the stirring method is not particularly limited, and stirring with a dispersion blade, a rotation and revolution mixer, a paint shaker, a ball mill, an ultrasonic disperser, a homogenizer, a planetary mixer, or the like may be used. It is important not to add the binder to the mixed solution before the bead mill dispersion treatment in the step (b).

That is, since heat generated by the bead mill dispersion treatment and a high shearing force are applied to the mixed solution, the binder may cause gelation or aggregation. As a result, it is difficult for the binder to bind the individual barium sulfate particles together, and the structure of the heat-resistant porous layer cannot be maintained. Thus, shrinkage of the polyolefin porous film due to heat may not be prevented. Therefore, the binder is preferably added in the step (c).

[Surfactant]

The slurry obtained in the step (c) may appropriately contain a surfactant in order to form a heat-resistant porous layer with a more uniform thickness on the polyolefin porous film. The surfactant is a wetting agent, a leveling agent, an anti-foaming agent, or the like. In order to prevent the dispersion state of the barium sulfate particles from being broken, the above surfactant is preferably added last in a state where the binder has been sufficiently mixed.

Next, a method for forming a heat-resistant porous layer on a polyolefin porous film in an embodiment of the present invention will be described.

[Method for Forming Heat Resistant Porous Layer]

A method for forming a heat-resistant porous layer for obtaining the separator in the present invention has the following configuration: that is,

(d) a step of coating at least one surface of the polyolefin porous film with the slurry; and
(e) a step of drying the solvent with a dryer after the coating to form a heat-resistant porous layer.

In the step (d), a known method can be used as a method for coating at least one surface of the polyolefin porous film with the slurry (heat-resistant porous layer). Examples of the method include a reverse roll coating method, a gravure coating method, a small-diameter gravure coating method, a kiss coating method, a roll brushing method, an air knife coating method, a Mayer bar coating method, a pipe doctor coating method, a blade coating method, and a die coating method. These methods may be performed alone or in combination.

In the step (e), a drying temperature of the dryer is not particularly limited, and is preferably 40°C or higher and 90°C or lower. The drying temperature of the dryer is more preferably 45°C or higher and 80°C or lower, and still more preferably 50°C or higher and 70°C or lower.

When the drying temperature is lower than 40°C, the solvent cannot be sufficiently dried, and thus, the solvent may remain in the heat-resistant porous layer. In the case where the solvent is particularly water, the moisture content of the battery separator may increase. When the drying temperature is higher than 90°C, the polyolefin porous film may shrink due to heat before the heat-resistant porous layer is formed.

When the drying temperature is set to 40°C or higher and 90°C or lower, the solvent can be efficiently removed without shrinking the polyolefin porous film, which is preferred.

The battery separator according to the embodiment of the present invention can be used as a battery separator of a secondary battery such as a nickel-metal hydride battery, a nickel-cadmium battery, a nickel-zinc battery, a silver-zinc battery, a lithium ion secondary battery, a lithium polymer secondary battery, and a lithium-sulfur battery. In particular, the battery separator according to the embodiment of the present invention is preferably used as a separator of a lithium ion secondary battery.

EXAMPLES

Hereinafter, the present invention will be described in detail with reference to Examples, but the present invention is not limited to these Examples. The measured values in Examples are values determined by the following method.

1. Thickness (μm)

The thickness of the polyolefin porous film and the thickness of the battery separator were determined by averaging measured values of thickness at five points using a contact type film thickness meter ("LITE MATIC" (registered trademark) series 318 manufactured by Mitutoyo Corporation). Measurement was carried out using a super-hard sphere surface probe with φ 9.5 mm under the condition of a load of 0.01 N. Further, the thickness (μm) of the heat-resistant porous layer was determined, based on the following calculation formula, by washing the battery separator with the same liquid as the solvent contained in the above slurry, and measuring the polyolefin porous film, from which the heat-resistant porous layer was removed, with the contact type film thickness meter.

$$\text{Thickness (μm) of heat-resistant porous layer} = \text{thickness (μm) of battery separator} - \text{thickness (μm) of polyolefin porous film}$$

In Table 1, a thickness of a heat-resistant porous layer on a surface A refers to a thickness of a heat-resistant porous layer provided on one surface of the polyolefin porous film, and a thickness of a heat-resistant porous layer on a surface B refers to a thickness of a heat-resistant porous layer provided on the other surface.

2. Air Permeability Resistance (sec/100 ccAir)

Using an Oken type air-permeability tester (EGO-1T, manufactured by Asahi Seiko Co., Ltd.), each sample of the polyolefin porous film and the battery separator was fixed so as not to be wrinkled, and measured in accordance with JIS P8117. The sample was 100 mm square, measurement points were five points in total, that is, a center portion and four corners of a sample, and an average value of the measured values of the five points was used as the air permeability resistance (sec/100 ccAir). In the case where a length of one side of a sample is less than 100 mm, values measured at five points at intervals of 50 mm may be used. The amount of increase (sec/100 ccAir) in the air permeability resistance of the heat-resistant porous layer was determined, based on the following calculation formula, by washing the battery separator with the same liquid as the solvent contained in the slurry, and measuring the polyolefin porous film, from which the heat-resistant porous layer was removed, with the Oken type air-permeability tester. Further, the amount of increase in the air permeability resistance of the heat-resistant porous layer was divided by the thickness of the heat-resistant porous layer to obtain the amount of increase (sec/100 ccAir) in the air permeability resistance per 1 μm thickness of the heat-resistant porous layer.

$$\text{Amount of increase in air permeability resistance (sec/100 ccAir)} = \text{Air permeability resistance of porous film (sec/100 ccAir)} - \text{Air permeability resistance of battery separator (sec/100 ccAir)}$$

3. Average Particle Diameter (μm)

The average particle diameter of the barium sulfate particles was determined by taking an LEI image of barium sulfate particles on a surface of the heat-resistant porous layer at a magnification of 10,000 times using a scanning electron microscope (JSM6701F, manufactured by JEOL Ltd.) with an acceleration voltage of 2.0 kV. Next, long diameters of 100 barium sulfate particles were randomly measured, and an average value thereof was defined as the average particle diameter.

4. Concentration of Hydrogen Sulfide (ppm by volume)

A concentration of hydrogen sulfide was determined by enclosing 5 $m^2$ of a battery separator in a glass container having a capacity of 1L (I-BOTTLE NEO GL-45, manufactured by As One Corporation), allowing the container to stand in an oven at 60°C for 24 hours, then measuring gas in the container three times using a Kitagawa Gas Detector Tube (AP-20, manufactured by Komyo Rikagaku Kogyo K.K.) and a hydrogen sulfide detector tube (120U, manufactured by Komyo Rikagaku Kogyo K.K.) in accordance with the gas detector tube method defined by JIS K 0804: 2014, and converting the average value thereof to a value per 1 m$^2$ of the battery separator.

5. X-ray Imaging Method

The X-ray imaging method was performed by producing a cell type scintillator described in paragraph [0112] of "JP 2017-187818 A". Specifically, first, a laminate for test was prepared to evaluate and identify a winding position between an electrode and a battery separator. Four negative electrodes (30 mm × 30 mm) each using a copper foil as a current collector and three battery separators (34 mm × 34 mm) were prepared, the battery separators were alternately stacked while being shifted in any direction, and a laminate for test was obtained.

Next, using an X-ray detector (1515DX manufactured by VAREX, pixel pitch: 127 μm) and the above cell type scintillator (pixel pitch: 127 μm), X-ray imaging of the laminate for test was performed under the following conditions.

Tube voltage of X-ray source: 80 kV,
Tube voltage of X-ray source: 20 μm,
Radiation source-FPD distance: 247 mm,
Radiation source-object distance: 82 mm (magnification: 3 times),
Imaging time: 1 sec (five images were imaged at an imaging time of 0.2 sec and averaged)

The presence or absence of a boundary line between the battery separator and the electrode was determined from the obtained image. The evaluation criteria are shown below.

A: Positional deviation between the separator and the electrode can be identified
C: Positional deviation between the separator and the electrode cannot be identified

6. Thermal Shrinkage Rate (%)

The heat resistance of the polyolefin porous film and the battery separator was measured in an MD direction (machine direction) and a TD direction (transverse direction) of the battery separator by the following method. A detailed procedure will be described below.

(1) Three battery separators each having a size of 100 mm × 100 mm were cut out, a transparent glass scale (measurement accuracy: 0.1 mm) was placed thereon, and a distance between midpoints of respective two opposing sides of a battery separator was measured as a length in the MD direction and a length in the TD direction, thereby obtaining the initial dimension (mm).
(2) The battery separator was sandwiched between two A3 sheets of paper, and was put in an oven at a temperature of 130°C and allowed to be left for 1 hour. Thereafter, the battery separator was taken out and allowed to be cooled for 30 minutes.
(3) The distance between the midpoints of the two opposing sides of the battery separator was measured again with the glass scale and defined as the dimension (mm) after shrinkage. The measurement position at this time was the same position as the position at which the initial dimension was measured, and when an end portion of the battery separator was curled, the measurement was carried out by expanding the end portion. Using the obtained initial dimension and the dimension after shrinkage, the respective thermal shrinkage rates (%) for the length in the MD direction and the length in the TD direction were obtained based on the following calculation formula.

$$\text{Thermal shrinkage rate (\%)} = \{\text{initial dimension (mm)} - \text{dimension after shrinkage (mm)}\}/\text{initial dimension (mm)} \times 100$$

7. Moisture Content (ppm)

The moisture content refers to a measured value determined by allowing 1 g of a battery separator to stand in an atmosphere having a dew point of -60°C for 24 hours, then heating the battery separator in a nitrogen atmosphere at a temperature condition of 150°C for 10 minutes, and measuring the moisture content of the battery separator using a Karl Fischer moisture content meter (MKC-610, manufactured by Kyoto Electronics Manufacturing Co., Ltd.) placed in an atmosphere having a dew point of -60°C.

**EP 4 016 568 A1**

In Examples and Comparative Examples of the present invention, the following barium sulfate particles were used.

Barium sulfate A: Glauber's salt method, nominal particle diameter: 0.6 $\mu$m
Barium sulfate B: sulfuric acid method (derived from barium carbonate), nominal particle diameter: 0.6 $\mu$m, heat-treated
Barium sulfate C: sulfuric acid method (derived from barium carbonate), nominal particle diameter: 0.6 $\mu$m,
Barium sulfate D: Glauber's salt method, nominal particle diameter: 0.35 $\mu$m,
Barium sulfate E: Glauber's salt method, nominal particle diameter: 2.0 $\mu$m,
Barium sulfate F: Glauber's salt method, nominal particle diameter: 0.1 $\mu$m,
Barium sulfate G: Glauber's salt method, nominal particle diameter: 2.3 $\mu$m,

The term "heat treatment" herein means that barium sulfate particles are allowed to stand in an atmosphere with a temperature of 200°C for 24 hours in a state where a vent is opened by 25% using a constant temperature oven DKN302 (manufactured by Yamato Scientific Co., Ltd.), and then slowly cooled for 2 hours.

8. Cycle Characteristic Test of Battery

[Production of Positive Electrode]

An NMP solution containing 1.2 parts by mass of PVDF as a binder was added to 97 parts by mass of lithium cobalt oxide as an active material and 1.8 parts by mass of carbon black and mixed with them to obtain a slurry containing a positive electrode mixture. The slurry containing a positive electrode mixture was uniformly applied to both surfaces of a positive electrode current collector made of an aluminum foil having a thickness of 20 $\mu$m and dried to form a positive electrode layer. Then, the positive electrode current collector was subjected to compression molding using a roll press machine, followed by adjusting the density of the positive electrode layer excluding the current collector to 3.6 g/cm$^3$, and a positive electrode was produced.

[Production of Negative Electrode]

An aqueous solution containing 1.0 part by mass of sodium carboxymethyl cellulose was added to 98 parts by mass of artificial graphite as an active material and mixed with it, followed by adding 1.0 part by mass of styrene-butadiene latex in terms of a solid content as a binder to the mixture and mixing them, and a slurry containing a negative electrode mixture was obtained. The slurry containing a negative electrode mixture was uniformly applied to both surfaces of a negative electrode current collector made of a copper foil having a thickness of 10 $\mu$m and dried to form a negative electrode layer. Then, the negative electrode current collector was subjected to compression molding using a roll press machine, followed by adjusting the density of the negative electrode layer excluding the current collector to 1.45 g/cm$^3$, and a negative electrode was produced.

[Production of Battery for Test]

The above positive electrode and negative electrode to which tabs are attached and the respective microporous films were used to produce a wound body. Next, the wound body was placed in an aluminum laminate bag, and an electrolytic solution (1.1 mol/L, LiPF$_6$, which was obtained by adding 0.5 wt% of vinylene carbonate and 2 wt% of fluoroethylene carbonate to a mixed liquid of ethylene carbonate, ethyl methyl carbonate, and diethylene carbonate (ethylene carbonate/ethyl methyl carbonate/diethylene carbonate = 3/5/2 (volume ratio))) was added dropwise to the wound body, and the aluminum laminate bag was sealed with a vacuum laminator. Next, 10% of the total capacity was charged at 0.2 C (C represents a current value at which a battery can be fully charged in one hour, and was 300 mA in the case of the present battery), and then one side of the laminate was opened for degassing and immediately sealed again with a vacuum sealer. Then, constant current-constant voltage charging was performed at 0.1 C, 4.35 V, and a cutoff current of 0.05 C, and further, constant current discharging was performed at 0.1 C until a voltage value reached 3 V. Thereafter, constant current-constant voltage charging was performed at 0.2 C, 4.35 V, and a cutoff current of 0.05 C, and then, constant current discharging was performed at 0.2 C until a voltage value reached 3 V. This charging and discharging at 0.2 C were repeated 3 times. This battery was used as a battery for test of 300 mAh class.

[Cycle Characteristic Test]

The battery for test, for which the output characteristic test was completed, was charged at a constant current

**15**

and a constant voltage of 0.5 C, 4.35 V, and a cutoff current of 0.05 C, and then discharged at a constant current of 0.2 C until a voltage reached 3 V, and this capacity was recorded as a first discharging capacity. The battery in this state was charged and discharged under the following conditions.

Charging: constant current-constant voltage charging at 1 C and 4.35 V, cut-off current: 0.05 C
Discharging: constant current discharging at 1 C and 3 V
Measurement temperature: 25°C

The charging and discharging were performed on a total of three test batteries, and an average value of a ratio of the 1500th discharging capacity to the first discharging capacity, that is, the capacity retention rate was calculated and used as an index of the cycle characteristics.

(Example 1)

[Production of Battery Separator]

To 100 parts by weight of water, 1 part by weight of sodium carboxymethyl cellulose was added, and the mixture was stirred at 600 rpm for 120 minutes by a three-one motor (manufactured by Toki Sangyo Co., Ltd.) equipped with a dispersion blade. Further, 1.14 parts by weight of barium sulfate A was added to 100 parts by weight of water while being stirred, and the mixture was further stirred for 60 minutes to obtain a mixed solution.

The obtained mixed solution was dispersed two times using a bead mill disperser (Picomill PCM-LR manufactured by Asada Iron Works Co., Ltd.) and zirconia beads having a bead particle diameter of 0.5 mm (TORAYCELAM $\varphi$: 0.5 mm manufactured by Toray Industries, Inc.) under the conditions of a bead filling rate of 75 volume%, a peripheral speed of 10 m/sec, and a flow rate of 16 kg/hr to obtain a masterbatch solution.

To 100 parts by weight of the obtained masterbatch solution, 3.5 parts by weight of an acrylic resin aqueous dispersion having a solid content of 40 wt% and 6.5 parts by weight of water were added while being stirred at 500 rpm by a three-one motor (manufactured by Toki Sangyo Co., Ltd.) equipped with a dispersion blade, and the mixture was further stirred for 10 minutes. Next, 0.1 parts by weight of a fluorine-based surfactant having a solid content of 100 wt% was added to 100 parts by weight of the masterbatch solution while being stirred, and the resultant mixture was further stirred for 10 minutes to obtain a slurry.

The obtained slurry was applied on one surface of a polyolefin porous film having a thickness of 12 $\mu$m by a microgravure method under the conditions of a drying temperature of 50°C and a conveying speed of 4 m/min to obtain a battery separator having a heat-resistant porous layer with a thickness of 4 $\mu$m.

In the obtained battery separator, a content of the barium sulfate particles was 88.8 volume%, and a content of the organic synthetic resin component was 11.2 volume% (dispersant: 2.2 volume%, binder: 9.0 volume%) when the total amount of the barium sulfate particles and the organic synthetic resin component in the heat-resistant porous layer was 100 volume%, and a content of the barium sulfate particles contained in the heat-resistant porous layer was 9.2 g/m$^2$.

(Example 2)

A battery separator was obtained in the same manner as in Example 1 except that a content of the barium sulfate particles was 71.0 volume%, and a content of the organic synthetic resin component was 29.0 volume% (dispersant: 5.8 volume%, binder: 23.2 volume%) when the total amount of the barium sulfate particles and the organic synthetic resin component in the heat-resistant porous layer was 100 volume%, and a content of the barium sulfate particles contained in the heat-resistant porous layer was 7.4 g/m$^2$.

(Example 3)

A battery separator was obtained in the same manner as in Example 1 except that a content of the barium sulfate particles was 80.0 volume%, and a content of the organic synthetic resin component was 20.0 volume% (dispersant: 4.0 volume%, binder: 16.0 volume%) when the total amount of the barium sulfate particles and the organic synthetic resin component in the heat-resistant porous layer was 100 volume%, and a content of the barium sulfate particles contained in the heat-resistant porous layer was 8.3 g/m$^2$.

(Example 4)

A battery separator was obtained in the same manner as in Example 1 except that a content of the barium sulfate particles was 95.0 volume%, and a content of the organic synthetic resin component was 5.0 volume% (dispersant:

1.0 volume%, binder: 4.0 volume%) when the total amount of the barium sulfate particles and the organic synthetic resin component in the heat-resistant porous layer was 100 volume%, and a content of the barium sulfate particles contained in the heat-resistant porous layer was 9.8 g/m$^2$.

(Example 5)

A battery separator was obtained in the same manner as in Example 1 except that a content of the barium sulfate particles was 92.0 volume%, and a content of the organic synthetic resin component was 8.0 volume% (dispersant: 1.6 volume%, binder: 6.4 volume%) when the total amount of the barium sulfate particles and the organic synthetic resin component in the heat-resistant porous layer was 100 volume%, and a content of the barium sulfate particles contained in the heat-resistant porous layer was 9.5 g/m$^2$.

(Example 6)

A battery separator was obtained in the same manner as in Example 1 except that a heat-resistant porous layer was provided on one surface of the polyolefin porous film in a thickness of 1.1 $\mu$m, and a content of the barium sulfate particles contained in the heat-resistant porous layer was 2.5 g/m$^2$.

(Example 7)

A battery separator was obtained in the same manner as in Example 1 except that a heat-resistant porous layer was provided on one surface of the polyolefin porous film in a thickness of 2.1 $\mu$m, and a content of the barium sulfate particles contained in the heat-resistant porous layer was 4.8 g/m$^2$.

(Example 8)

A battery separator was obtained in the same manner as in Example 1 except that a heat-resistant porous layer was provided on one surface of the polyolefin porous film in a thickness of 3.0 $\mu$m, and a content of the barium sulfate particles contained in the heat-resistant porous layer was 6.9 g/m$^2$.

(Example 9)

A battery separator was obtained in the same manner as in Example 1 except that a heat-resistant porous layer was provided on one surface of the polyolefin porous film in a thickness of 3.9 $\mu$m and another heat-resistant porous layer was provided on the other surface in a thickness of 4.0 $\mu$m, and a content of the barium sulfate particles contained in the heat-resistant porous layer was 18.1 g/m$^2$.

(Example 10)

A battery separator was obtained in the same manner as in Example 1 except that a heat-resistant porous layer was provided on one surface of the polyolefin porous film in a thickness of 3.0 $\mu$m and another heat-resistant porous layer was provided on the other surface in a thickness of 3.0 $\mu$m, and a content of the barium sulfate particles contained in the heat-resistant porous layer was 13.8 g/m$^2$.

(Example 11)

A battery separator was obtained in the same manner as in Example 1 except that a heat-resistant porous layer was provided on one surface of the polyolefin porous film in a thickness of 2.5 $\mu$m and another heat-resistant porous layer was provided on the other surface in a thickness of 2.5 $\mu$m, and a content of the barium sulfate particles contained in the heat-resistant porous layer was 11.5 g/m$^2$.

(Example 12)

A battery separator was obtained in the same manner as in Example 1 except that the barium sulfate particles were changed to barium sulfate B.

(Example 13)

A battery separator was obtained in the same manner as in Example 1 except that the barium sulfate particles were changed to barium sulfate D.

(Example 14)

A battery separator was obtained in the same manner as in Example 1 except that barium sulfate particles were changed to barium sulfate E.

(Example 15)

A battery separator was obtained in the same manner as in Example 1 except that the dispersant in the organic synthetic resin component was changed to hydroxymethyl cellulose.

(Example 16)

A battery separator was obtained in the same manner as in Example 1 except that the dispersant in the organic synthetic resin component was changed to sodium polyacrylate.

(Example 17)

A battery separator was obtained in the same manner as in Example 1 except that the binder in the organic synthetic resin component was changed to polyvinyl alcohol.

(Example 18)

A battery separator was obtained in the same manner as in Example 1 except that the ceramic beads were changed to zirconia beads having a bead particle diameter of 0.3 mm (TORAYCELAM φ: 0.3 mm, manufactured by Toray Industries, Inc.).

(Example 19)

A battery separator was obtained in the same manner as in Example 1 except that the ceramic beads were changed to zirconia beads having a bead particle diameter of 0.8 mm (TORAYCELAM φ: 0.8 mm, manufactured by Toray Industries, Inc.).

(Example 20)

A battery separator was obtained in the same manner as in Example 1 except that a filling rate of the ceramic beads was changed to 70 volume%.

(Example 21)

A battery separator was obtained in the same manner as in Example 1 except that a filling rate of the ceramic beads was changed to 80 volume%.
The results of Examples 1 to 21 are shown in Table 1. In all of Examples 1 to 21, the positional deviation between the separator and the electrode was identifiable by X-ray imaging, the thermal shrinkage rate was kept low, the amount of increase in the air permeability resistance was low, and the moisture content was also kept low.

(Comparative Example 1)

A battery separator was obtained in the same manner as in Example 1 except that a content of the barium sulfate particles was 69.0 volume%, and a content of the organic synthetic resin component was 31.0 volume% (dispersant: 6.1 volume%, binder: 24.9 volume%) when the total amount of the barium sulfate particles and the organic synthetic resin component in the heat-resistant porous layer was 100 volume%, and a content of the barium sulfate particles contained in the heat-resistant porous layer was 7.2 g/m². The results of Comparative Example 1 are shown in Table 1. In Comparative Example 1, the content of the barium sulfate particles was less than 70 volume%, and thus, the results showed that the amount of increase in the air permeability resistance per 1 $\mu$m thickness of the heat-resistant porous layer was large, and the thermal shrinkage rate was high.

(Comparative Example 2)

Production of a battery separator was attempted in which a content of the barium sulfate particles was 97.0 volume%, and a content of the organic synthetic resin component was 3.0 volume% (dispersant: 0.6 volume%, binder: 2.4 volume%) when the total amount of the barium sulfate particles and the organic synthetic resin component in the heat-resistant porous layer was 100 volume%, and a content of the barium sulfate particles contained in the heat-resistant porous layer was 10.0 g/m$^2$. However, the heat-resistant porous layer was significantly detached from the polyolefin porous film, and thus a battery separator could not be obtained. In Table 1, "-" indicates that the battery separator could not be obtained, and thus the measurement was impossible.

(Comparative Example 3)

A battery separator was obtained in the same manner as in Example 1 except that a heat-resistant porous layer was provided on one surface of the polyolefin porous film in a thickness of 0.7 $\mu$m, and a content of the barium sulfate particles contained in the heat-resistant porous layer was 1.6 g/m$^2$. The results of Comparative Example 3 are shown in Table 1. In Comparative Example 3, the content of the barium sulfate particles was less than 1.8 g/m$^2$, and thus, the results showed that the positional deviation between the separator and the electrode could not be identified by X-ray imaging, and the thermal shrinkage rate was also high.

(Comparative Example 4)

A battery separator was obtained in the same manner as in Example 1 except that a heat-resistant porous layer was provided on one surface of the polyolefin porous film in a thickness of 4.5 $\mu$m and another heat-resistant porous layer was provided on the other surface in a thickness of 4.5 $\mu$m, and a content of the barium sulfate particles contained in the heat-resistant porous layer was 20.7 g/m$^2$. The results of Comparative Example 4 are shown in Table 1. In Comparative Example 4, the content of the barium sulfate particles was more than 19.8 g/m$^2$, and thus, the results showed that the positional deviation between the separator and the electrode could not be identified by X-ray imaging.

(Comparative Example 5)

A battery separator was obtained in the same manner as in Example 1 except that barium sulfate particles were changed to barium sulfate C. The results of Comparative Example 5 are shown in Table 1. The results showed that, in Comparative Example 5, the concentration of hydrogen sulfide was high.

(Comparative Example 6)

A battery separator was obtained in the same manner as in Example 1 except that the barium sulfate particles were changed to barium sulfate F. The results of Comparative Example 6 are shown in Table 1. The results showed that, in Comparative Example 6, the average particle diameter of barium sulfate was small, and the amount of increase in air permeability resistance per 1 $\mu$m thickness of the heat-resistant porous layer was large.

(Comparative Example 7)

A battery separator was obtained in the same manner as in Example 1 except that the barium sulfate particles were changed to barium sulfate G. The results of Comparative Example 7 are shown in Table 1. The results showed that, in Comparative Example 7, the thermal shrinkage rate was large.

(Comparative Example 8)

A battery separator was obtained in the same manner as in Example 1 except that the ceramic beads were changed to zirconia beads having a bead particle diameter of 0.2 mm (TORAYCELAM $\varphi$: 0.2 mm, manufactured by Toray Industries, Inc.). The results of Comparative Example 8 are shown in Table 1. The results showed that, in Comparative Example 8, the thermal shrinkage rate was large.

(Comparative Example 9)

A battery separator was obtained in the same manner as in Example 1 except that the ceramic beads were changed to zirconia beads having a bead particle diameter of 1.5 mm (TORAYCELAM φ: 1.5 mm, manufactured by Toray Industries, Inc.). The results of Comparative Example 9 are shown in Table 1. The results showed that, in Comparative Example 9, the thermal shrinkage rate was large.

(Comparative Example 10)

A battery separator was obtained in the same manner as in Example 1 except that the filling rate of the ceramic beads was changed to 90 volume%. The results of Comparative Example 10 are shown in Table 1. The results showed that, in Comparative Example 10, the average particle diameter of barium sulfate was small, and the amount of increase in air permeability resistance per 1 μm thickness of the heat-resistant porous layer was large.

(Comparative Example 11)

A battery separator was obtained in the same manner as in Example 1 except that the barium sulfate particles were changed to aluminum oxide particles having an average particle diameter of 0.5 μm. The results of Comparative Example 11 are shown in Table 1. In Comparative Example 11, barium sulfate was not contained, and thus, the results showed that the positional deviation between the separator and the electrode could not be identified by X-ray imaging, and the moisture content was high.

(Comparative Example 12)

A battery separator was obtained in the same manner as in Example 1 except that the barium sulfate particles were changed to boehmite particles having an average particle diameter of 0.4 μm. The results of Comparative Example 12 are shown in Table 1. In Comparative Example 12, barium sulfate was not contained, and thus, the results showed that the positional deviation between the separator and the electrode could not be identified by X-ray imaging, and the moisture content was high.

Table 1

| | Inorganic particles | | Organic synthetic resin component | Thickness of heat-resistant porous layer | | Basis weight of barium sulfate particles in heat-resistant porous layer | Average particle diameter of barium sulfate particle | Bead particle diameter | Bead filling rate |
|---|---|---|---|---|---|---|---|---|---|
| | Kind | Content (volume%) | Content (volume%) | A surface (μm) | B surface (μm) | (g/m²) | (μm) | (mm) | (volume%) |
| Example 1 | Barium sulfate A | 88.8 | 11.2 | 4.0 | 0.0 | 9.2 | 0.61 | 0.5 | 75 |
| Example 2 | Barium sulfate A | 71.0 | 29.0 | 4.0 | 0.0 | 7.4 | 0.62 | 0.5 | 75 |
| Example 3 | Barium sulfate A | 80.0 | 20.0 | 4.0 | 0.0 | 8.3 | 0.62 | 0.5 | 75 |
| Example 4 | Barium sulfate A | 95.0 | 5.0 | 4.0 | 0.0 | 9.8 | 0.59 | 0.5 | 75 |
| Example 5 | Barium sulfate A | 92.0 | 8.0 | 4.0 | 0.0 | 9.5 | 0.60 | 0.5 | 75 |
| Example 6 | Barium sulfate A | 88.8 | 11.2 | 1.1 | 0.0 | 2.5 | 0.60 | 0.5 | 75 |
| Example 7 | Barium sulfate A | 88.8 | 11.2 | 2.1 | 0.0 | 4.8 | 0.58 | 0.5 | 75 |
| Example 8 | Barium sulfate A | 88.8 | 11.2 | 3.0 | 0.0 | 6.9 | 0.61 | 0.5 | 75 |
| Example 9 | Barium sulfate A | 88.8 | 11.2 | 3.9 | 4.0 | 18.1 | 0.61 | 0.5 | 75 |
| Example 10 | Barium sulfate A | 88.8 | 11.2 | 3.0 | 3.0 | 13.8 | 0.60 | 0.5 | 75 |
| Example 11 | Barium sulfate A | 88.8 | 11.2 | 2.5 | 2.5 | 11.5 | 0.60 | 0.5 | 75 |
| Example 12 | Barium sulfate B | 88.8 | 11.2 | 4.0 | 0.0 | 9.2 | 0.61 | 0.5 | 75 |
| Example 13 | Barium sulfate D | 88.8 | 11.2 | 4.0 | 0.0 | 9.2 | 0.34 | 0.5 | 75 |
| Example 14 | Barium sulfate E | 88.8 | 11.2 | 4.0 | 0.0 | 9.2 | 1.91 | 0.5 | 75 |
| Example 15 | Barium sulfate A | 88.8 | 11.2 | 4.0 | 0.0 | 9.2 | 0.62 | 0.5 | 75 |
| Example 16 | Barium sulfate A | 88.8 | 11.2 | 4.0 | 0.0 | 9.2 | 0.59 | 0.5 | 75 |
| Example 17 | Barium sulfate A | 88.8 | 11.2 | 4.0 | 0.0 | 9.2 | 0.61 | 0.5 | 75 |
| Example 18 | Barium sulfate A | 88.8 | 11.2 | 4.0 | 0.0 | 9.2 | 0.60 | 0.3 | 75 |
| Example 19 | Barium sulfate A | 88.8 | 11.2 | 4.0 | 0.0 | 9.2 | 0.60 | 0.8 | 75 |
| Example 20 | Barium sulfate A | 88.8 | 11.2 | 4.0 | 0.0 | 9.2 | 0.67 | 0.5 | 70 |

EP 4 016 568 A1

Table 1 (continued)

| | Inorganic particles | | Organic synthetic resin component | Thickness of heat-resistant porous layer | | Basis weight of barium sulfate particles in heat-resistant porous layer | Average particle diameter of barium sulfate particle | Bead particle diameter | Bead filling rate |
|---|---|---|---|---|---|---|---|---|---|
| | Kind | Content (volume%) | Content (volume%) | A surface (μm) | B surface (μm) | (g/m²) | (μm) | (mm) | (volume%) |
| Example 21 | Barium sulfate A | 88.8 | 11.2 | 4.0 | 0.0 | 9.2 | 0.48 | 0.5 | 80 |
| Comparative Example 1 | Barium sulfate A | 69.0 | 31.0 | 4.0 | 0.0 | 7.2 | 0.60 | 0.5 | 75 |
| Comparative Example 2 | Barium sulfate A | 97.0 | 3.0 | - | - | - | 0.61 | 0.5 | 75 |
| Comparative Example 3 | Barium sulfate A | 88.8 | 11.2 | 0.7 | 0.0 | 1.6 | 0.58 | 0.5 | 75 |
| Comparative Example 4 | Barium sulfate A | 88.8 | 11.2 | 4.5 | 4.5 | 20.7 | 0.61 | 0.5 | 75 |
| Comparative Example 5 | Barium sulfate C | 88.8 | 11.2 | 4.0 | 0.0 | 9.2 | 0.62 | 0.5 | 75 |
| Comparative Example 6 | Barium sulfate F | 88.8 | 11.2 | 4.0 | 0.0 | 9.2 | 0.15 | 0.5 | 75 |
| Comparative Example 7 | Barium sulfate G | 88.8 | 11.2 | 4.0 | 0.0 | 9.2 | 2.48 | 0.5 | 75 |
| Comparative Example 8 | Barium sulfate A | 88.8 | 11.2 | 4.0 | 0.0 | 9.2 | 2.80 | 0.2 | 75 |
| Comparative Example 9 | Barium sulfate A | 88.8 | 11.2 | 4.0 | 0.0 | 9.2 | 2.10 | 1.5 | 75 |
| Comparative Example 10 | Barium sulfate A | 88.8 | 11.2 | 4.0 | 0.0 | 9.2 | 0.25 | 0.5 | 90 |
| Comparative Example 11 | Aluminum oxide | 88.8 | 11.2 | 4.0 | 0.0 | 0 | 0.50 | 0.5 | 75 |
| Comparative Example 12 | Boehmite | 88.8 | 11.2 | 4.0 | 0.0 | 0 | 0.35 | 0.5 | 75 |

Table 1 (continued)

| | Amount of increase in air permeability resistance per 1 μm of heat-resistant porous layer (sec/100ccAir) | Concentration of hydrogen sulfide generated per 1 m² of battery separator (ppm by volume) | Capacity retention rate of test battery cell at 1500th cycle (%) | X-ray imaging | Thermal shrinkage rate 130°C/1 hr (%) MD (%) | TD (%) | Moisture content (ppm) |
|---|---|---|---|---|---|---|---|
| Example 1 | 7.0 | < 0.1 | 75 | A | 3.2 | 2.7 | 240 |
| Example 2 | 9.5 | < 0.1 | 70 | A | 6.0 | 5.4 | 246 |
| Example 3 | 8.2 | < 0.1 | 71 | A | 4.0 | 3.3 | 248 |
| Example 4 | 3.5 | < 0.1 | 76 | A | 2.0 | 1.5 | 249 |
| Example 5 | 4.4 | < 0.1 | 74 | A | 2.7 | 2.2 | 254 |
| Example 6 | 3.0 | < 0.1 | 77 | A | 7.8 | 6.7 | 180 |
| Example 7 | 4.2 | < 0.1 | 77 | A | 6.2 | 5.3 | 213 |
| Example 8 | 4.8 | < 0.1 | 75 | A | 4.9 | 4 | 217 |
| Example 9 | 8.0 | < 0.1 | 71 | A | 1.0 | 0.8 | 360 |
| Example 10 | 7.5 | < 0.1 | 71 | A | 1.5 | 1.3 | 305 |
| Example 11 | 6.8 | < 0.1 | 73 | A | 2.0 | 1.8 | 280 |
| Example 12 | 7.1 | 0.2 | 70 | A | 2.9 | 2.5 | 244 |
| Example 13 | 9.2 | < 0.1 | 71 | A | 2.8 | 2.4 | 280 |
| Example 14 | 4.9 | < 0.1 | 78 | A | 7.2 | 7 | 202 |
| Example 15 | 7.1 | < 0.1 | 72 | A | 3.2 | 2.8 | 282 |
| Example 16 | 8.8 | < 0.1 | 77 | A | 3.5 | 3 | 230 |
| Example 17 | 6.9 | < 0.1 | 74 | A | 3.3 | 2.8 | 329 |
| Example 18 | 6.0 | < 0.1 | 74 | A | 6.0 | 5.4 | 230 |
| Example 19 | 8.0 | < 0.1 | 72 | A | 2.4 | 2.5 | 245 |
| Example 20 | 6.5 | < 0.1 | 78 | A | 3.6 | 3.2 | 205 |
| Example 21 | 8.3 | < 0.1 | 72 | A | 2.9 | 2.6 | 270 |
| Comparative Example 1 | 10.4 | < 0.1 | 64 | A | 8.3 | 8 | 260 |
| Comparative Example 2 | - | - | - | - | - | - | - |
| Comparative Example 3 | 2.6 | < 0.1 | 77 | C | 11.0 | 9.3 | 175 |
| Comparative Example 4 | 8.5 | < 0.1 | 67 | C | 1.0 | 0.8 | 370 |
| Comparative Example 5 | 6.8 | 1.0 | 43 | A | 3.1 | 2.6 | 250 |
| Comparative Example 6 | 12.5 | < 0.1 | 63 | A | 2.2 | 1.9 | 317 |
| Comparative Example 7 | 4.1 | < 0.1 | 77 | A | 9 | 8.2 | 186 |
| Comparative Example 8 | 4.9 | < 0.1 | 78 | A | 8.5 | 8.2 | 222 |
| Comparative Example 9 | 5.1 | < 0.1 | 68 | A | 8.9 | 8.5 | 251 |
| Comparative Example 10 | 10.5 | < 0.1 | 68 | A | 2.3 | 2.1 | 349 |
| Comparative Example 11 | 7.2 | < 0.1 | 67 | C | 3 | 2.7 | 850 |
| Comparative Example 12 | 7.8 | < 0.1 | 65 | C | 2.9 | 2.3 | 750 |

Although various embodiments have been described above with reference to the drawings, it is needless to say that the present invention is not limited to these examples. It is apparent to those skilled in the art that various changes and modifications can be conceived within the scope of the claims, and it is also understood that such variations and modifications belong to the technical scope of the present invention. In addition, constituent elements in the embodiments described above may be combined freely within a range not departing from the spirit of the present invention.

The present application is based on Japanese Patent Application No. 2019-149148 filed on August 15, 2019, and the contents thereof are incorporated by reference in the present application.

INDUSTRIAL APPLICABILITY

The separator of the present invention can be suitably used as a battery separator that is preferably used for a nonaqueous electrolyte battery such as a lithium ion battery.

**Claims**

1. A battery separator comprising:

   a polyolefin porous film; and
   a heat-resistant porous layer provided on at least one surface of the polyolefin porous film, wherein:

   the heat-resistant porous layer contains barium sulfate particles and an organic synthetic resin component;
   the barium sulfate particles are contained in the heat-resistant porous layer in an amount of 70 volume% or more and 96 volume% or less based on 100 volume% of a total of the barium sulfate particles and the organic synthetic resin component, and are contained in the heat-resistant porous layer in an amount of 1.8 g/m$^2$ or more and 19.8 g/m$^2$ or less; and
   an amount of increase in an air permeability resistance per 1 $\mu$m thickness of the heat-resistant porous layer is 10.0 sec/100 ccAir or less, a shrinkage rate when the heat-resistant porous layer has been left under an atmosphere of 130°C for 1 hour is 8.0% or less, and a concentration of hydrogen sulfide is 0.3 ppm by volume or less

   (in which the concentration of hydrogen sulfide is obtained by converting a measured value to a value per 1 m$^2$ of a battery separator, the measured value being determined by enclosing 5 m$^2$ of a battery separator into a sealed container having a capacity of 1 L, leaving the battery separator under an atmosphere of 60°C for 24 hours, and then measuring gas in the container according to a gas detector tube method specified by JIS K 0804:2014).

2. The battery separator according to claim 1, wherein the barium sulfate particles are precipitated barium sulfate.

3. The battery separator according to claim 2, wherein the precipitated barium sulfate is produced by Glauber's salt method.

4. The battery separator according to any one of claims 1 to 3, wherein an average particle diameter of the barium sulfate particles is 0.3 $\mu$m or more and 2.0 $\mu$m or less.

5. The battery separator according to any one of claims 1 to 4, wherein a thickness of the heat-resistant porous layer is 1 $\mu$m or more and 8 $\mu$m or less.

6. The battery separator according to any one of claims 1 to 5, wherein the organic synthetic resin component contains a dispersant and a binder.

7. The battery separator according to claim 6, wherein the dispersant is a cellulose-based resin.

8. The battery separator according to claim 6 or 7, wherein the binder is an acrylic resin.

9. The battery separator according to any one of claims 1 to 8, having a moisture content of 500 ppm or less.

10. A method for producing the battery separator according to any one of claims 1 to 9, the method comprising:

    mixing barium sulfate particles, a dispersant and a solvent, thereby obtaining a mixed solution; and
    then dispersing the mixed solution by a bead mill disperser including ceramic beads having a bead particle diameter of 0.3 mm or more and 1.0 mm or less under a condition of a filling rate of 65 volume% or more and 85 volume% or less, thereby preparing a masterbatch solution.

## INTERNATIONAL SEARCH REPORT

| International application No. |
| --- |
| PCT/JP2020/030505 |

A. CLASSIFICATION OF SUBJECT MATTER
H01G 11/52(2013.01)i; H01G 11/84(2013.01)i; H01M 50/409(2021.01)i
FI: H01M2/16 M; H01M2/16 L; H01M2/16 P; H01G11/52; H01G11/84
According to International Patent Classification (IPC) or to both national classification and IPC

B. FIELDS SEARCHED

Minimum documentation searched (classification system followed by classification symbols)
H01G11/52; H01G11/84; H01M2/16

Documentation searched other than minimum documentation to the extent that such documents are included in the fields searched
Published examined utility model applications of Japan     1922-1996
Published unexamined utility model applications of Japan     1971-2020
Registered utility model specifications of Japan     1996-2020
Published registered utility model applications of Japan     1994-2020

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y | JP 2015-151445 A (MITSUBISHI PLASTICS INC.) 24 August 2015 (2015-08-24) claim 10, paragraphs [0004]-[0007], [0064], [0087], [0096], table 1, example 1 | 1-10 |
| Y | JP 2015-162313 A (ZEON CORP.) 07 September 2015 (2015-09-07) paragraphs [0154], [0155], [0160], [0163]-[0165],[0169], table 1 | 1-10 |
| Y | JP 2005-71979 A (MITSUBISHI CHEMICAL CORP.) 17 March 2005 (2005-03-17) paragraphs [0009], [0010], [0056]-[0059] | 1-10 |
| Y | WO 2018/037867 A1 (ZEON CORP.) 01 March 2018 (2018-03-01) paragraphs [0007], [0009], [0046], [0050] | 1-10 |
| Y | JP 2014-208780 A (MITSUBISHI PLASTICS INC.) 06 November 2014 (2014-11-06) paragraph [0100] | 1-10 |

☒ Further documents are listed in the continuation of Box C.    ☒ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 19 October 2020 (19.10.2020) | 27 October 2020 (27.10.2020) |

| Name and mailing address of the ISA/ <br> Japan Patent Office <br> 3-4-3, Kasumigaseki, Chiyoda-ku, <br> Tokyo 100-8915, Japan | Authorized officer |
| --- | --- |
| | Telephone No. |

Form PCT/ISA/210 (second sheet) (January 2015)

23

**INTERNATIONAL SEARCH REPORT**

| International application No. |
|---|
| PCT/JP2020/030505 |

C (Continuation). DOCUMENTS CONSIDERED TO BE RELEVANT

| Category* | Citation of document, with indication, where appropriate, of the relevant passages | Relevant to claim No. |
|---|---|---|
| A | WO 2017/038067 A1 (ZEON CORP.) 09 March 2017 (2017-03-09) paragraphs [0068], [0069], [0075], [0087], table1, example 9 | 1-10 |

Form PCT/ISA/210 (continuation of second sheet) (January 2015)

**INTERNATIONAL SEARCH REPORT**
Information on patent family members

International application No.

PCT/JP2020/030505

| Patent Documents referred in the Report | Publication Date | Patent Family | Publication Date |
|---|---|---|---|
| JP 2015-151445 A | 24 Aug. 2015 | (Family: none) | |
| JP 2015-162313 A | 07 Sep. 2015 | (Family: none) | |
| JP 2005-71979 A | 17 Mar. 2005 | US 2006/0127753 A1 paragraphs [0016], [0085], [0087]-[0090] US 2011/0165473 A1 WO 2005/015660 A1 EP 1667252 A1 CN 1860627 A | |
| WO 2018/037867 A1 | 01 Mar. 2018 | US 2019/0207189 A1 paragraphs [0011], [0014], [0081], [0089]-[0090] EP 3506394 A1 CN 109565020 A KR 10-2019-0042554 A | |
| JP 2014-208780 A | 06 Nov. 2014 | (Family: none) | |
| WO 2017/038067 A1 | 09 Mar. 2017 | US 2018/0248162 A1 paragraphs [0130]-[0137], [0160], [0184], table 1, example 9 EP 3346521 A1 CN 107925039 A KR 10-2018-0041683 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6337512 B
- JP 5898405 B
- JP 6526359 B
- JP 2017187818 A
- JP 2019149148 A